# EUROPEAN PATENT SPECIFICATION

(11) **EP 2 911 389 B1**
(45) Date of publication and mention of the grant of the patent: **30.05.2018**
(21) Application number: 14155700.9
(22) Date of filing: 19.02.2014
(51) Int. Cl.: B61L 15/00, H04N 9/73, H04N 1/60

(54) **System for controlling a colour scheme on a display**
System zur Steuerung einer Farbanordnung auf einer Anzeige
Système pour commander une palette de couleur sur un écran

(43) Date of publication of application: 26.08.2015
(73) Proprietor: Televic Rail NV, 8870 Izegem (BE)
(72) Inventor: Van Doorselaer, Geert, Assebroek 8310 (BE)
(74) Representative: Van Bladel, Marc

(56) References cited:
- EP-A1- 1 835 259
- JP-A- 2005 212 633
- JP-A- 2007 158 936
- US-A1- 2007 282 522
- Modelle: "Garmin nüvi 3400-Serie Benutzerhandbuch", , 15 September 2011 (2011-09-15), page 3490, XP055115383, Retrieved from the Internet: URL:https://web.archive.org/web/2011121515 3258/http://static.garmincdn.com/pumac/nuv i_34xx_Series_OM_DE.pdf [retrieved on 2014-04-25]
- Anonymous: "Sun and Moon Rise/Set Tool For Auto Nuvi Units | POI Factory", , 4 April 2011 (2011-04-04), XP055115381, Retrieved from the Internet: URL:http://www.poi-factory.com/node/32714 [retrieved on 2014-04-25]
- Anonymous: "Is it possible to make windows 7 change theme automatically depending - Microsoft Community", , 28 July 2011 (2011-07-28), XP055115310, Retrieved from the Internet: URL:http://answers.microsoft.com/en-us/win dows/forum/windows_7-desktop/is-it-possibl e-to-make-windows-7-change-theme/7a03f4f0- a849-429a-9651-92cfcf32ce43 [retrieved on 2014-04-25]
- Anonymous: "Z 50000 - Wikipédia", , 7 February 2014 (2014-02-07), XP055115281, Retrieved from the Internet: URL:http://fr.wikipedia.org/w/index.php?ti tle=Z_50000&oldid=101009149 [retrieved on 2014-04-25]
- Anonymous: "Windows XP visual styles - Wikipedia", , 16 February 2014 (2014-02-16), XP055372021, Retrieved from the Internet: URL:https://en.wikipedia.org/w/index.php?t itle=Windows_XP_visual_styles&oldid=595744 613 [retrieved on 2017-05-11]

## Description

### Field of the invention

The present invention is generally related to the field of systems for controlling colours used on a display, the display being positioned e.g. in a public transportation vehicle, an hospital, a school, hotel, nursery home etc.

### Background of the invention

Today in public transport dynamic colours are used to create a certain 'mood' inside the vehicles, whereby 'mood' is defined as a psychological or functional state suggested by the use of lighting and display colours. An example can be found in the Z 50000 trains used for suburban railway services in the Ile-de-France region around Paris.

However, passenger information systems on such vehicles are not equipped to follow this mood scheme. In case LED displays are used, the colours are (in most cases) fixed, i.e. green or amber or yellow or red (fixed) on a black background. In the case of TFT displays, the colours are defined in the content management system and these are created independent of the mood colours of the train.

In the art systems are known for adapting colours based on video content. For example US2009/175536 discloses extracting and processing video content encoded in a rendered colour space to be emulated by an ambient light source. Colour information is extracted from a video signal and transformed through unrendered colour space using tristprimary matrices to form a second rendered colour space to drive the ambient light source.

In US2006/058925 is presented an on-line analysis of meta-data received together with a video signal. This analysis results in an adaptation of the lighting surrounding the presentation device. One or more characteristics of the meta-data are filtered out and translated into lighting settings of one or more light elements, which in turn can contain one or more light sources.

Application WO99/04562 relates to ambient light dependent video signal processing. The method comprises measuring an amount of ambient light to obtain a measured amount of ambient light and processing a video signal in dependence upon the measured amount of ambient light. The video signal is substantially immediately affected when there is a large change in the measured amount of ambient light, while the video signal is affected upon an occurrence of a scene change when there is a small change in the measured amount of ambient
US 2007/0282522 A1 discloses a navigation device which adapts a colour scheme setting according to the time of the day.

Hence, there is a need for a solution wherein the limitations encountered in e.g. trains as described above are avoided or overcome, so that the current mood of the train is reflected in the colours used on passenger information displays and other displays in the vehicle at any time. An important constraint for such a solution is that all requirements with respect to readability (contrast etc.) be met on the displays.

### Summary of the invention

It is an object of embodiments of the present invention to provide for a system for controlling colour use on a display whereby the colour selection is dependent on the environment wherein the display is used. It is a further object to make sure that the proposed system meets the requirements related to readability.

The above objective is accomplished by the solution according to the present invention.

In a first aspect the invention relates to a system for controlling a colour scheme on a display according to claim 1. Further aspects of the invention are defined by the dependent claims.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates an embodiment of the system according to the invention.
Fig.2 illustrates a CIE xy chromaticity diagram.
Fig.3 illustrates another embodiment of the system according to the invention.
Fig.4 illustrates another embodiment of the system according to the invention.
Fig.5 illustrates another embodiment of the system according to the invention.
Fig.6 illustrates background(s) and foregrounds of a display.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner to the extent covered by the appended claims.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention to the extent they are comprised in the appended claims.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention presents a system wherein the current mood of the train is reflected in the colours used on displays like e.g. passenger information displays, at any time, while the mood colours can shift, possibly gradually, from one colour to another and while still all requirements of readability are met on the information displays. The invention is applicable to a wide range of displays, like e.g. passenger information displays, seat reservation displays, fixed Human Machine Interface displays, mobile personal devices and the like. Also displays based on various display technologies can be applied.

In the description below a scenario is considered wherein the invention is applied on a train. Apart from public transportation means the proposed solution can also be applied to non-public transport environments like e.g. nursery homes, hospitals, schools, hotels, ... In other words, any environment can be envisaged where digital signage systems (with emphasis on textual data) are used.

The 'mood' is defined as a function of location and/or time, preferably both time and location. This means that for instance the mood in the front of the train can be different from the mood in the back of a train or/and that the mood in the back of the train has a delay of a few seconds or minutes with respect to the mood of the front of the train.

At the heart of the system is a colour calculation module that operates based on a control signal. The control signal is so 'shaped' that it corresponds to one or more colour hues that were derived based on information on time and/or location. Hence, in contrast to prior art solutions, it is not the content shown on the displays that determines which colours are used.

A colour scheme is the choice of colours used in design for a range of media. For example, the use of a white background with black text is an example of a basic and commonly default colour scheme. A basic colour scheme uses two colours that look appealing together. More advanced colour schemes involve several colours in combination, usually based around a single colour.

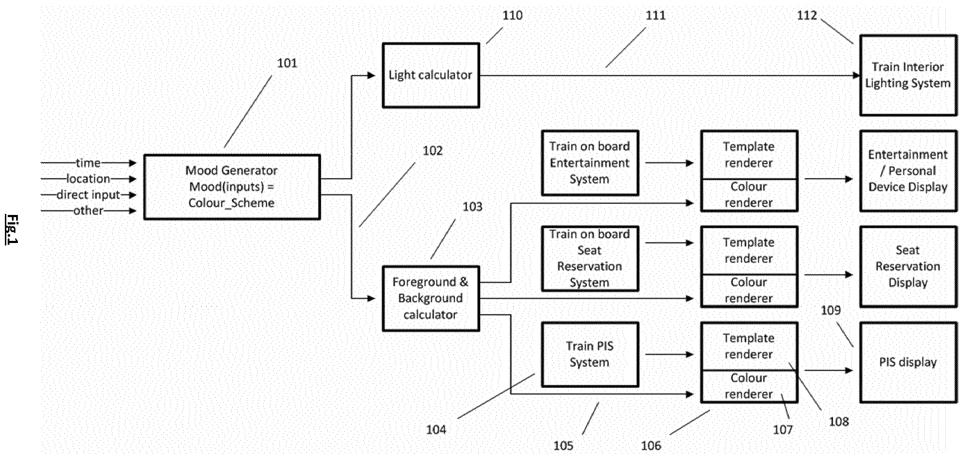

In a preferred embodiment of the invention the system comprises a colour scheme control unit (101) to generate a certain 'mood'. The colour scheme control unit determines at least one colour hue, based on information on time and/or location. In the embodiment of a system according to the invention shown in Fig.1, also other input of information is illustrated. This other input may for example be an alarm signal or a manual trigger (which gives direct input to the mood generator).

The colour scheme can be represented in various ways. The minimum information of course identifies the at least one colour hue defining the mood. The colour scheme may however also be defined as two numbers, x and y for example, as defined by CIE1931, which then define hue and saturation of one colour. Further useful information to define the colour scheme may relate to the brightness or, as an alternative, Luv. Also a white point reference, defined by the colour temperature in Kelvin or by other means such as CIE1931 x and y coordinates, is preferred information. A colour scheme is generally interpreted as a choice of colours (plural), useful information to define the colour scheme may relate to more than one hue, more than one hue and saturation or more than one colour. Various colour spaces can be considered.

The colour scheme control unit 101 that generates at least one colour hue suggesting the mood, outputs a control signal 102 corresponding to said mood. This control signal contains the information for defining the colour scheme on the display for rendering a portion of content. The control signal 102 is fed to the colour calculation module. In the embodiment of Fig.1 several content management systems are shown, one for each display. A passenger information system is shown, a train on board reservation system and an on-board entertainment system. The control signal is also received by a train interior lighting system 112 after passing through a light calculator 110. The mood thus also determines the light in the environment where the displays are positioned.

Based on the received control signal (102) the colour calculation module (103) determines the colour scheme to be used on the display(s) connected to the colour calculation module for rendering a certain piece of content. The colour scheme is next provided (via signal 105) to the rendering means (107). The content is typically produced in the content management system (104). The actual rendering on the displays is thus performed based on the mood and the content.

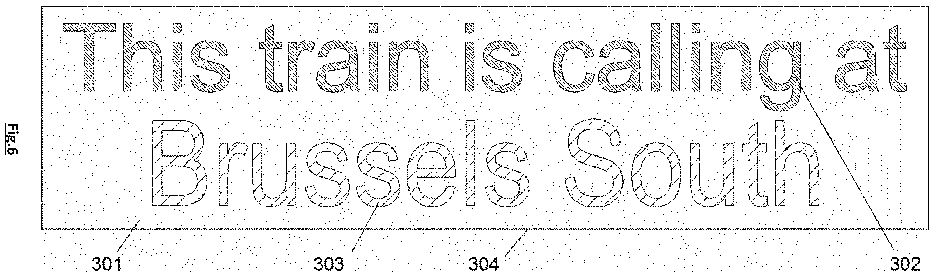

The content contains the textual information, the character sets, the fonts, the layout, the clocks etc. Reference is made to Fig.6. The layout does not contain the colours, but for each asset (302,303) (i.e. person or object) it is defined as "foreground" (302, 303), while the layer upon which the "foreground" objects are placed is defined as "background" (301) without specifying the resulting colour. More than one "foreground" may be defined, such as "Foreground1" (302) and "Foreground2" (303). Foreground(s) generally contain less pixels than the background. The background contains in general more pixels than the foreground(s) and in general the plurality of the pixels of the display (304).

Background and foreground colours are dynamically calculated and adapted. This calculation is also performed in the colour calculation unit.

Calculation is based on a function that takes the 'mood' values as inputs and by working on brightness and saturation levels. The colour calculation module calculates the foreground and background colours, while still taking into account the required contrast and optionally also the defined colour temperature.

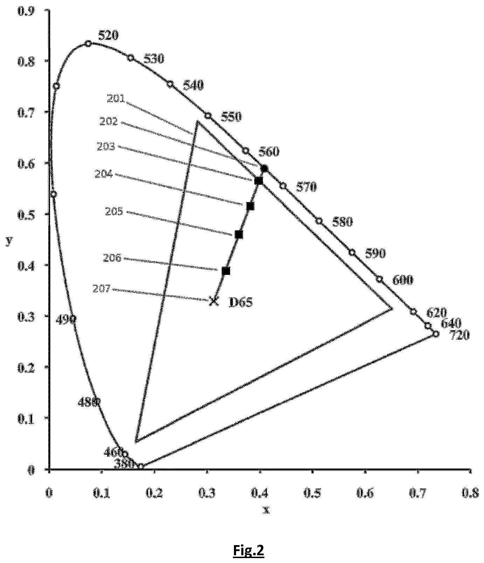

An example is provided of a calculation of foreground(s) and background colour in case only the hue has been provided by the mood generator/colour scheme control unit. The colour triangle 201 in Fig.2 comprises all colours which can be shown with an arbitrary chosen colour display. Hue can be described by its dominant wavelength. The (monochromatic) colour point 202 corresponds to the dominant wavelength of the hue defined by the colour scheme control unit that generates the mood. A reference white point 207 is depicted as well. The D65 white point is chosen as an example here. One possible implementation for obtaining the foreground and background colours is the following :
- Choose the reference white with the highest possible brightness provided by the display as the foreground colour
- In the CIE diagram, find the intersect of the colour triangle comprising all colours which can be shown with the display, with the straight line that connects the reference white point with the colour point corresponding with the hue defined by the colour scheme control unit
- This intersect defines the colour point of the background colour
- The brightness of the background colour is defined by dividing the brightness of the foreground by a given contrast figure (for example 20), as contrast is defined as (the ratio of) the brightness of the brightest colour divided by the brightness of faintest colour.

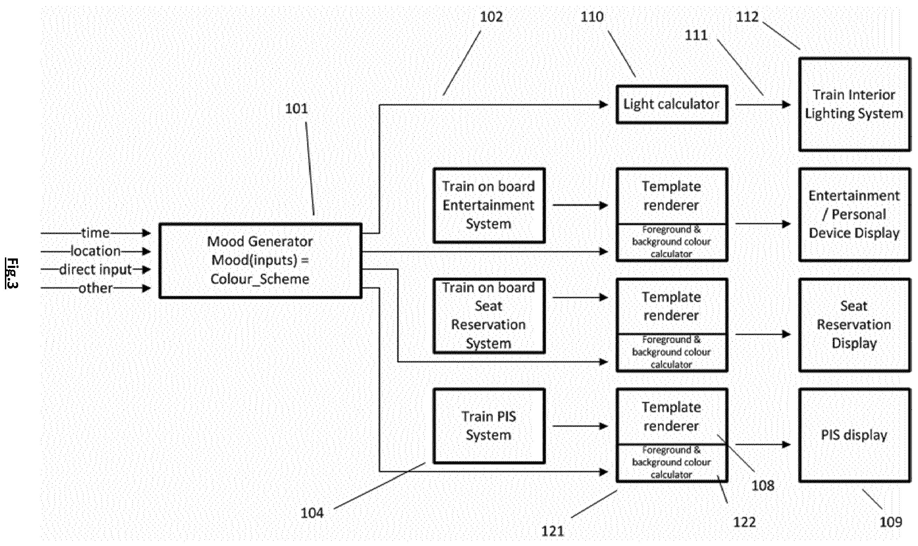

Another embodiment of the system of this invention is shown in Fig.3. The colour calculation module is now integrated in the rendering means (i.e. the block that deals with both the template and colour rendering). As before the colour calculation module receives control signal 102 corresponding to one or more colour hues.

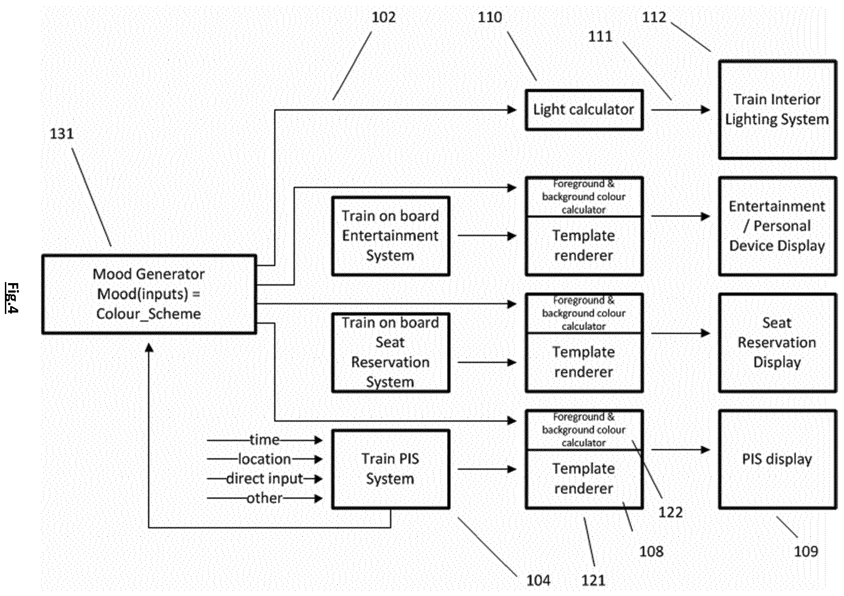

Fig.4 shows yet another embodiment. The mood generator 101 now receives trigger signals (time, location and optionally other info) from the content management system 104, in this particular case the on-board passenger information system. As in Fig.3, the colour calculation module is part of the rendering block 121. Again the control signal 102 is fed to the colour calculation module.

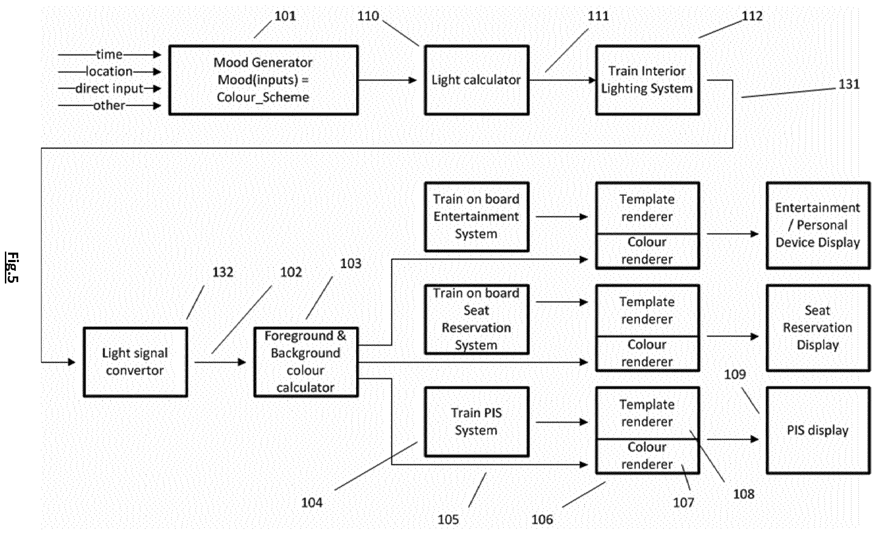

Fig.5 shows an embodiment wherein the control signal (102) is obtained not in a direct way from the colour scheme control unit (101), but rather indirectly. The signal output by the colour scheme control unit is fed to the train interior lighting system, which outputs a signal 131 to a light signal converter (132) which produces the control signal 102 towards the colour calculation module.

One application example is that in an underground metro the colours used on the displays reflect the environment above ground at the location of the metro. When the metro is passing below a park, a green colour scheme is used on the displays; when the metro is passing below a river, then a blue colour scheme is used.

Another example is that in a metro the reference white point follows the time of the day. During noon time, a "colder" white point is used (for example D65); while at the time of sunset and sunrise a "warmer" white point is used (for example D50). Also the colour scheme is adapted during the day for the other information on the display (background, foreground, other).

Another example is that during commuting peak hours soothing and relaxing colour schemes are used on the displays (and in the lighting scheme), while during off-peak hours and during holiday periods more bright and vivid colour schemes are used on the displays (and in the lighting scheme).

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. System for controlling a colour scheme used on a display, comprising
- a display,
- a content management system (104) for providing a portion of content to be displayed on said display (109),
- a colour calculation module (103) arranged for receiving a control signal (102) corresponding to a colour hue, wherein the colour hue is described by its dominant wavelength and determined based on information on time and/or location and/or an alarm signal or a manual trigger and arranged for defining, based on said control signal corresponding to said colour hue, the colour scheme to be used on said display and for outputting said colour scheme to rendering means for rendering said portion of content, said colour calculation module further being arranged for dynamically calculating foreground and background colours based on said colour hue to which said control signal corresponds, **characterized in that** a colour triangle in a CIE diagram represents all colours showable on said display (109), whereby a reference point (207) with maximum brightness level is taken as said foreground colour and whereby said background colour is found as the intersection (203) of said colour triangle and a line connecting said reference point (207) with a colour point corresponding to said colour hue to which said control signal corresponds.

2. System for controlling a colour scheme as in claim 1, comprising a colour scheme control unit (101) arranged for determining said at least one colour hue based on said information on time and/or location and/or an alarm signal or a manual trigger.

3. System for controlling a colour scheme as in claim 2, wherein said colour scheme control unit is arranged for outputting said control signal to said colour calculation module.

4. System for controlling a colour scheme as in claim 2 or 3, wherein said colour scheme control unit is arranged for determining an indication on at least one saturation level of at least one colour represented by said at least one colour hue.

5. System for controlling a colour scheme as in claim 4, wherein said colour scheme control unit is arranged for determining an indication on at least one brightness level of said at least one colour represented by said at least one colour hue.

6. System for controlling a colour scheme as in 4 or 5, wherein said colour scheme control unit is arranged for expressing said at least one colour represented by said at least one colour hue using coordinates in at least one of the following colour spaces : CIE 1931 XYZ, CIERGB, CIELUV, CIELAB, sRGB, Adobe RGB, xvYCC, HSV, HSL, YCbCr, YPbPr.

7. System for controlling a colour scheme as in any of claims 2 to 6, wherein said colour scheme control unit is arranged for determining an indication on a reference white point as said reference point (207).

8. System for controlling a colour scheme as in any of the previous claims, wherein said content management system is part of a passenger information system and/or a seat reservation information system.

9. System for controlling a colour scheme as in any of the previous claims, wherein said control signal further comprises an indication of time and whereby said colour calculation module is arranged for calculating, based on said indication of time, a gradual fading from a current colour scheme to another colour scheme.

10. System for controlling a colour scheme as in any of the previous claims, wherein said portion of content comprises at least one item to be displayed and an indication of whether said item forms foreground or background, said foreground comprising actual information and said background forming a scene upon which said foreground is placed.

11. System for controlling a colour scheme as in claim 10, wherein the portion of content comprises at least two items to be displayed and an indication of whether said items form different foregrounds.

12. System for controlling a colour scheme as in any of the previous claims, wherein said colour calculation module is integrated with said rendering means for rendering said portion of content.

13. System for controlling a colour scheme as in any of claims 2 to 11, wherein said colour calculation module is a stand-alone unit arranged for receiving input from said colour scheme control unit.

14. System for controlling a colour scheme as in any of the previous claims, comprising a plurality of displays.

15. System for controlling a colour scheme as in claim 14, further comprising a plurality of colour calculation modules each arranged for receiving a separate control signal corresponding to a colour hue for a different display of said plurality, and for dynamically calculating foreground and background colours for that display based on said colour hue to which said separate control signal corresponds.

## Patentansprüche

1. System zum Steuern eines Farbschemas, das an einer Anzeige verwendet wird, umfassend
- eine Anzeige,
- ein Inhaltsverwaltungssystem (104), um einen Teil des Inhalts bereitzustellen, der an der Anzeige (109) anzuzeigen ist,
- ein Farbberechnungsmodul (103), das eingerichtet ist, um ein Steuersignal (102) zu empfangen, das einem Farbton entspricht, wobei der Farbton durch seine dominante Wellenlänge beschrieben wird und basierend auf Informationen über Zeit und/oder Standort und/oder einem Alarmsignal oder einem manuellen Auslöser bestimmt wird, und das eingerichtet ist, um basierend auf dem Steuersignal, das dem Farbton entspricht, das Farbschema zu definieren, das an der Anzeige zu verwenden ist, und um das Farbschema an Wiedergabemittel auszugeben, um den Teil des Inhalts wiederzugeben, wobei das Farbberechnungsmodul ferner eingerichtet ist, um basierend auf dem Farbton, dem das Steuersignal entspricht, Vorder- und Hintergrundfarben dynamisch zu berechnen,
**dadurch gekennzeichnet, dass** ein Farbdreieck in einem CIE-Diagramm alle Farben darstellt, welche die Anzeige (109) zeigen kann, wobei ein Referenzpunkt (207) mit einem maximalen Helligkeitspegel als Vordergrundfarbe genommen wird, und wobei die Hintergrundfarbe als der Schnittpunkt (203) des Farbdreiecks und einer Linie, die den Referenzpunkt (207) mit einem Farbpunkt verbindet, der dem Farbton entspricht, dem das Steuersignal entspricht, gefunden wird.

2. System zum Steuern eines Farbschemas nach Anspruch 1, umfassend eine Farbschemasteuereinheit (101), die eingerichtet ist, um den mindestens einen Farbton basierend auf den Informationen über Zeit und/oder Standort und/oder einem Alarmsignal oder einem manuellen Auslöser zu bestimmen.

3. System zum Steuern eines Farbschemas nach Anspruch 2, wobei die Farbschemasteuereinheit eingerichtet ist, um das Steuersignal an das Farbberechnungsmodul auszugeben.

4. System zum Steuern eines Farbschemas nach Anspruch 2 oder 3, wobei die Farbschemasteuereinheit eingerichtet ist, um eine Angabe über mindestens einen Sättigungspegel mindestens einer Farbe zu bestimmen, die durch mindestens einen Farbton dargestellt ist.

5. System zum Steuern eines Farbschemas nach Anspruch 4, wobei die Farbschemasteuereinheit eingerichtet ist, um eine Angabe über mindestens einen Helligkeitspegel der mindestens eine Farbe zu bestimmen, die durch den mindestens einen Farbton dargestellt wird.

6. System zum Steuern eines Farbschemas nach Anspruch 4 oder 5, wobei die Farbschemasteuereinheit eingerichtet ist, um die mindestens eine Farbe, die durch den mindestens einen Farbton dargestellt wird, unter Verwendung der Koordinaten in mindestens einem der folgenden Farbräume auszudrücken: CIE 1931 XYZ, CIERGB, CIELUV, CIELAB, sRGB, Adobe RGB, xvYCC, HSV, HSL, YCbCr, YPbPr.

7. System zum Steuern eines Farbschemas nach einem der Ansprüche 2 bis 6, wobei die Farbschemasteuereinheit eingerichtet ist, um eine Angabe über einen Referenzweißpunkt als den Referenzpunkt (207) zu bestimmen.

8. System zum Steuern eines Farbschemas nach einem der vorhergehenden Ansprüche, wobei das Inhaltsverwaltungssystem Teil eines Fahrgastinformationssystems und/oder eines Sitzplatzreservierungsinformationssystems ist.

9. System zum Steuern eines Farbschemas nach einem der vorhergehenden Ansprüche, wobei das Steuersignal ferner eine Zeitangabe umfasst, und wobei das Farbberechnungsmodul eingerichtet ist, um basierend auf der Zeitangabe ein allmähliches Ausblenden von einem aktuellen Farbschema auf ein anderes Farbschema zu berechnen.

10. System zum Steuern eines Farbschemas nach einem der vorhergehenden Ansprüche, wobei der Teil des Inhalts mindestens ein anzuzeigendes Element und eine Angabe darüber, ob das Element den Vordergrund oder den Hintergrund bildet, umfasst, wobei der Vordergrund die eigentlichen Informationen umfasst und der Hintergrund eine Szene bildet, in die der Vordergrund gesetzt wird.

11. System zum Steuern eines Farbschemas nach Anspruch 10, wobei der Teil des Inhalts mindestens zwei anzuzeigende Elemente und eine Angabe darüber, ob die Elemente verschiedene Vordergründe bilden, umfasst.

12. System zum Steuern eines Farbschemas nach einem der vorhergehenden Ansprüche, wobei das Farbberechnungsmodul mit den Wiedergabemitteln integriert ist, um den Teil des Inhalts wiederzugeben.

13. System zum Steuern eines Farbschemas nach einem der Ansprüche 2 bis 11, wobei das Farbberechnungsmodul eine eigenständige Einheit ist, die eingerichtet ist, um eine Eingabe von der Farbschemasteuereinheit zu empfangen.

14. System zum Steuern eines Farbschemas nach einem der vorhergehenden Ansprüche, umfassend eine Vielzahl von Anzeigen.

15. System zum Steuern eines Farbschemas nach Anspruch 14, ferner umfassend eine Vielzahl von Farbberechnungsmodulen, die jeweils eingerichtet sind, um ein getrenntes Steuersignal zu empfangen, das einem Farbton für eine andere Anzeige der Vielzahl entspricht, und um Vorder- und Hintergrundfarben für diese Anzeige basierend auf dem Farbton, dem das getrennte Steuersignal entspricht, dynamisch zu berechnen.

## Revendications

1. Système pour commander une palette de couleur utilisée sur un écran, comprenant
- un écran,
- un système de gestion de contenu (104) pour fournir une portion de contenu à afficher sur ledit écran (109),
- un module de calcul de couleur (103) agencé pour recevoir un signal de commande (102) correspondant à une teinte de couleur, dans lequel la teinte de couleur est décrite par sa longueur d'onde dominante et déterminée sur la base d'informations concernant le temps et/ou l'emplacement et/ou d'un signal d'alarme ou d'un déclencheur manuel et agencée pour définir, sur la base dudit signal de commande correspondant à ladite teinte de couleur, la palette de couleur à utiliser sur ledit écran et pour sortir ladite palette de couleur sur un moyen de rendu pour rendre ladite portion de contenu, ledit module de calcul de couleur étant en outre agencé pour calculer dynamiquement des couleurs d'avant-plan et d'arrière-plan sur la base de ladite teinte de couleur à laquelle ledit signal de commande correspond,
**caractérisé en ce qu'**un triangle de couleur dans un schéma CIE représente toutes les couleurs pouvant être illustrées sur ledit écran (109), moyennant quoi un point de référence (207) avec un niveau de luminosité maximum est pris comme couleur d'avant-plan et moyennant quoi ladite couleur d'arrière-plan est trouvée comme l'intersection (203) dudit triangle de couleur et d'une ligne reliant ledit point de référence (207) à un point de couleur correspondant à ladite teinte de couleur à laquelle correspond ledit signal de commande.

2. Système pour commander une palette de couleur selon la revendication 1, comprenant une unité de commande de palette de couleur (101) agencée pour déterminer ladite au moins une teinte de couleur sur la base desdites informations concernant le temps et/ou l'emplacement et/ou d'un signal d'alarme ou d'un déclencheur manuel.

3. Système pour commander une palette de couleur selon la revendication 2, dans lequel ladite unité de commande de palette de couleur est agencée pour sortir ledit signal de commande sur ledit module de calcul de couleur.

4. Système pour commander une palette de couleur selon la revendication 2 ou 3, dans lequel ladite unité de commande de palette de couleur est agencée pour déterminer une indication sur au moins un niveau de saturation d'au moins une couleur représentée par ladite au moins une teinte de couleur.

5. Système pour commander une palette de couleur selon la revendication 4, dans lequel ladite unité de commande de palette de couleur est agencée pour déterminer une indication sur au moins un niveau de luminosité de ladite au moins une couleur représentée par ladite au moins une teinte de couleur.

6. Système pour commander une palette de couleur selon la revendication 4 ou 5, dans lequel ladite unité de commande de palette de couleur est agencée pour exprimer ladite au moins une couleur représentée par ladite au moins une teinte de couleur en utilisant des coordonnées dans au moins un des espaces de couleur suivants : CIE 1931 XYZ, CIERGB, CIELUV, CIELAB, sRGB, Adobe RGB, xvYCC, HSV, HSL, YCbCr, YPbPr.

7. Système pour commander une palette de couleur selon l'une quelconque des revendications 2 à 6, dans lequel ladite unité de commande de palette de couleur est agencée pour déterminer une indication sur un point blanc de référence en tant que dit point de référence (207).

8. Système pour commander une palette de couleur selon l'une quelconque des revendications précédentes, dans lequel ledit système de gestion de contenu fait partie d'un système d'informations de passager et/ou d'un système d'informations de réservation de siège.

9. Système pour commander une palette de couleur selon l'une quelconque des revendications précédentes, dans lequel ledit signal de commande comprend en outre une indication de temps et moyennant quoi ledit module de calcul de couleur est agencé pour calculer, sur la base de ladite indication de temps, une dégradation progressive d'une palette de couleur en cours vers une autre palette de couleur.

10. Système pour commander une palette de couleur selon l'une quelconque des revendications précédentes, dans lequel ladite portion de contenu comprend au moins un élément à afficher et une indication de si ledit élément forme l'avant-plan ou l'arrière-plan, ledit avant-plan comprenant des informations réelles et ledit arrière-plan formant une scène sur laquelle ledit arrière-plan est placé.

11. Système pour commander une palette de couleur selon la revendication 10, dans lequel ladite portion de contenu comprend au moins deux éléments à afficher et une indication de si lesdits éléments forment des avant-plans différents.

12. Système pour commander une palette de couleur selon l'une quelconque des revendications précédentes, dans lequel ledit module de calcul de couleur est intégré avec ledit moyen de rendu pour rendre ladite portion de contenu.

13. Système pour commander une palette de couleur selon l'une quelconque des revendications 2 à 11, dans lequel ledit module de calcul de couleur est une unité autonome agencée pour recevoir une entrée provenant de ladite unité de commande de palette de couleur.

14. Système pour commander une palette de couleur selon l'une quelconque des revendications précédentes, comprenant une pluralité d'écrans.

15. Système pour commander une palette de couleur selon la revendication 14, comprenant en outre une pluralité de modules de calcul de couleur agencés chacun pour recevoir un signal de commande séparé correspondant à une teinte de couleur pour un écran différent de ladite pluralité, et pour calculer dynamiquement des couleurs d'avant-plan et d'arrière-plan pour cet écran sur la base de ladite teinte de couleur à laquelle correspond ledit signal de commande séparé.
